# EUROPEAN PATENT SPECIFICATION

(11) **EP 2 978 664 B1**
(45) Date of publication and mention of the grant of the patent: **26.04.2017**
(21) Application number: 14721484.5
(22) Date of filing: 24.03.2014
(51) Int. Cl.: B64C 27/18, B64C 27/48

(54) **SYSTEM FOR OPERATING HELICOPTER BLADES WITH COMPRESSED AIR**
SYSTEM ZUM BETREIBEN VON HUBSCHRAUBERROTORBLÄTTERN MIT DRUCKLUFT
SYSTÈME DESTINÉ À FAIRE FONCTIONNER LES PALES D'HÉLICOPTÈRE À L'AIDE D'AIR COMPRIMÉ

(30) Priority: 25.03.2013 IT CZ20130005
(43) Date of publication of application: 03.02.2016
(73) Proprietor: Airi Re S.r.l. Unipersonale, 00197 Roma (RM) (IT)
(72) Inventor: AICHNER, Riccardo, I-37124 Verona (VR) (IT); DE ROSA, Pasquale, I-00060 Formello (RM) (IT)
(74) Representative: Scorza, Federica
(86) International application number: PCT/IB2014/000410
(87) International publication number: WO 2014/155179

(56) References cited:
- WO-A1-96/25328
- CH-A- 422 531
- FR-A1- 2 477 501
- GB-A- 2 080 230
- US-A- 4 371 314
- US-A- 6 131 879
- US-A1- 2013 161 444

## Description

The present invention relates to a system for operating the hollow blades of a helicopter with compressed air.

In particular, the present invention relates to a system for operating the helicopter blades with compressed air, of the type comprising a compressor for providing compressed air to the helicopter blades.

As is known, helicopters are equipped with a rotor comprising a rotating shaft (called also "mast") and blades that generate the necessary lift to sustain flight. The rotor has adjustable speed and inclination and is driven by a motor. The rotor is operated on a shaft in free rotation or rotated by motors. At the top of the shaft are generally attached two or more blades.

The rotor, due to its complexity, is a fundamental system of the rotorcraft. The blades of a rotorcraft are long and narrow airfoils with a high index of aspect ratio and a shape that minimizes the resistance caused by the extremities vortices.

Generally, a helicopter can have two rotors, the main and the secondary. The main rotor has two types of rotation: - the rotation around a vertical axis, in which the blades rotate at high speed developing a higher vertical lift opposite to the weight force of the helicopter; - the inclined rotation, in which the fast rotation of the blades develops a lift having a vertical component that supports the weight of the helicopter and a horizontal lift. In general, the rotor tilts in the advancement direction. The secondary rotor is placed in the helicopter tail to develop a compensation lift which keeps the tail motionless, since the tail, reacting to the rotation of the rotor, would tend to turn in the opposite direction.

Moreover, there are some helicopters in which the tail rotor was replaced by a fan located at the root of the tail boom cable into which the pressurized air is channeled from the fan and which is laterally expelled at the end of the tail boom by creating the desired yaw force.

The helicopter is also equipped with motors that move the rotors, making the rotating blades.

There are also, in the prior art, solutions in which the mechanical power is not transferred directly to the blades, but there is a turbine engine that generates a compressed fluid. In these solutions, in fact, the propulsion of the blades is achieved by the ejection of hot gas generated in the engine: substantially fluid is taken from the compressor of the engine having, however, as a consequence the change of the thermodynamic cycle of the engine with a drastic reduction of the global efficiency. Then the fluid is transferred from the motor to the blades by means of fixed tubes provided outside of the mechanical structure of the rotor of the helicopter, and then it is inserted in a box composed of two parts: a first part fixed to the structure of the helicopter and a second part rotating with the rotor head.

However, these solutions have the problem of not making the box with the hot fluid at a pressure of several atmospheres, about 5, actually sealed. These tubes, that constitute the fluid pipeline, in fact, are subject to the relative rotation in the rotor head area. Moreover, the rotor head is subject to the rotor vibrations, and therefore, is not air-proof and has a reduced seal warranty in time, being, therefore, prone to leakage with further decrease of the overall performance.

Therefore, the state of the art have problems related to the global efficiency and to the pressure loss of the fluid. In particular, in reference to the first problem, an aircraft can fly efficiently with a design load equal to the sum of the fuel weight and of the weight of the objects to be transported called payload. The known solutions, having very low efficiency, do not allow to carry substantial amounts of fuel, with the result of flying with a certain endurance and little payload or payload and with very low endurance. The second problem remains in the ends jet system: the fluid that must arrive at the end of the blades, but between the fixed part and the rotating part, it is under pressure and the pressure loss causes the additional reduction of efficiency.

A solution to this problem is proposed in the PCT application WO 96/25328 published on August 22th, 1996, in the name of Milot Michel. This patent application discloses a system for operating helicopter blades with compressed air, comprising an engine for generating mechanical power necessary to the helicopter lift; a compressor for generating the compressed air for operating the hollow blades, coupling means for coupling the engine with the compressor and coupling means for coupling the compressor with the blades comprising a hollow shaft of the rotor and an oscillating hollow head of the rotor supporting the blades. The hollow shaft of the rotor internally comprises a conduit connecting the hollow shaft of the rotor to the oscillating hollow head.

Even if advantageous under many aspects, this solution doesn't solve the problem of defining an efficient way for connecting the jet propelled blades of an oscillating rotor to the power source.

Purpose of the present invention is to provide a system for operating the helicopter blades with compressed air so as to overcome the limitations which still affect the systems and the helicopters previously described with reference to the known technique.

According to the present invention, a system for operating the helicopter blades with compressed air is provided, as defined in claim 1.

For a better understanding of the present invention a preferred embodiment is now described, purely as nonlimiting example, with reference to the accompanying drawings, in which:
- Figure 1 shows a schematic side view of a helicopter comprising a system for operating the helicopter blades with compressed air, according to the invention;
- Figures 2A-2B show schematic views of a first and of a second embodiment of a system for operating the helicopter blades with compressed air, according to the invention;
- Figure 3 shows a first schematic view of the rotor head, comprising an elastic and flexible elastomeric channel also with a plenum purpose and an oscillating part, of a helicopter comprising the system for operating the helicopter blades with compressed air, according to the invention;
- Figure 4 shows a first schematic view of rotor head comprising an elastomeric channel also with a plenum purpose and an elastic part of a helicopter comprising the system for operating the helicopter blades with compressed air, according to the invention;
- Figure 5 shows a second more detailed schematic view of the rotor of Figure 3 and the route taken by the compressed air across the head to the blades of a helicopter having two blades and comprising the system for operating the helicopter blades with compressed air, according to the invention;
- Figure 6 shows a second more detailed schematic view of the figure 4 and the path taken by the compressed air across the head to the blades of a helicopter having two or more than two blades and comprising the system for operating the helicopter blades with compressed air, according to the invention;
- Figure 7a shows a schematic top view of the rotor head of the two-bladed helicopter comprising the system for operating the helicopter blades with compressed air, according to the invention;
- Figures 7b-7c are schematic top views of the rotor head, respectively, of a three-bladed helicopter and four-bladed helicopter comprising the system for operating the helicopter blades with compressed air, according to the invention.

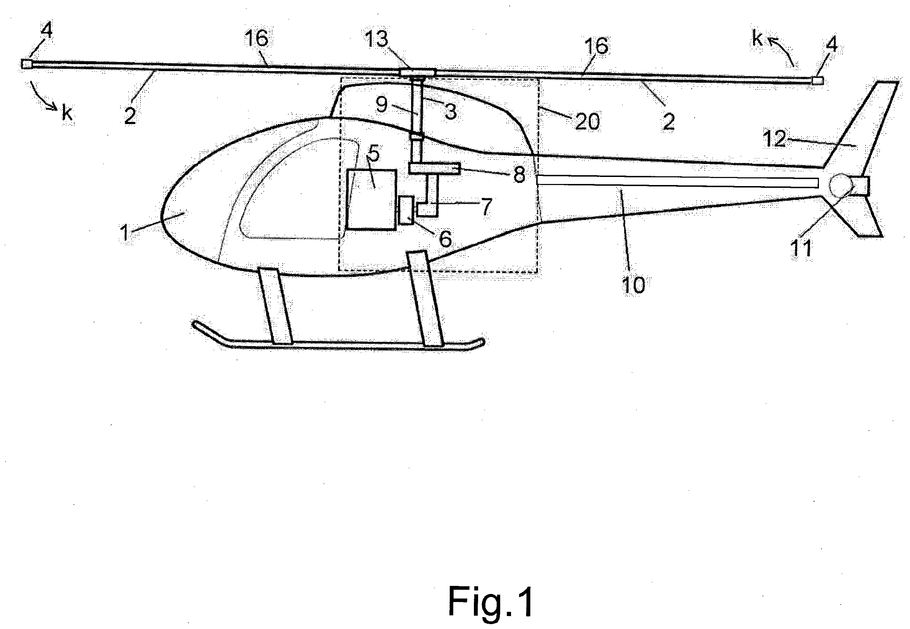

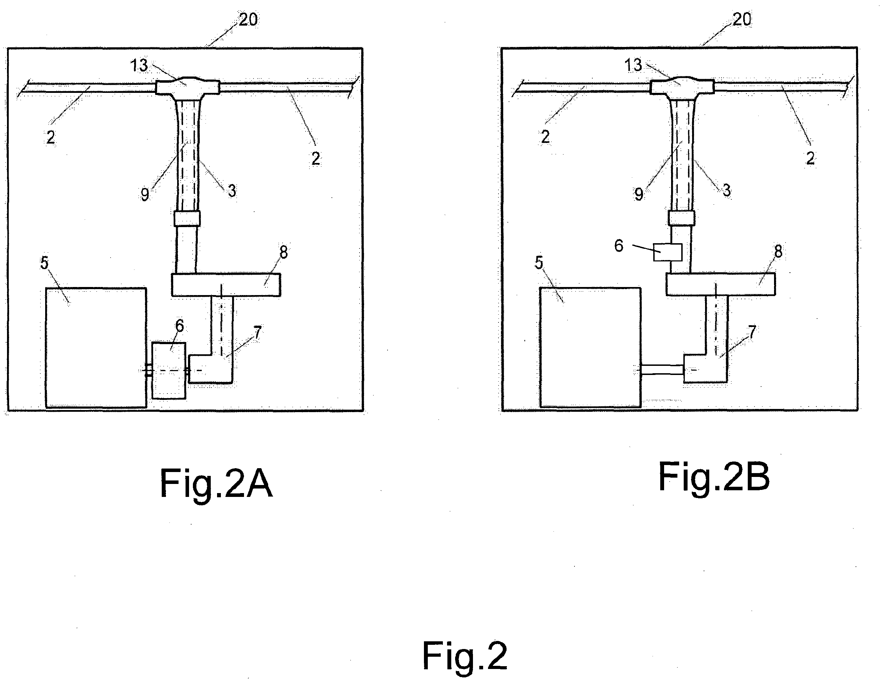

With reference to these figures, and in particular to figure 1 and 2, a system 20 for operating the helicopter blades with compressed air is shown, according to the invention. In details, the helicopter 1 comprises a rotor 3, blades 2 with nozzles 4 for the air to escape and a system 20 for operating the helicopter blades with compressed air, comprising a first machine dedicated to the generation of mechanical power, a second machine configured to generate a fluid mass of gas, for example compressed air, at a low temperature (about 50° C) and a pressure of approximately 2,5 atmospheres for operating the blades 2, and coupling elements of the first machine with the second machine and of the second machine with blades 2.

More precisely, the first machine comprises a motor 5 and the second machine comprises a compressor 8. Advantageously according to the invention, the motor 5 can be any engine that generates mechanical power.

Advantageously according to the invention, the compressed air is generated by the compressor 8 which uses the mechanical power of the engine 5.

The coupling elements of the first machine with the second machine may comprise a release element 6, for example mechanical upstream of the compressor, as shown in figure 2B, or fluid downstream of the compressor, as shown in figure 2A, for the free rotation of the rotor 3, and which acts on the motor 5, and a gearbox 7 at the output element 6, configured for activating the compressor 8. The coupling elements of the second machine with the blades 2 comprise the hollow shaft, or mast, of the rotor 3 comprising internally a conduit 9, and an oscillating elastic hollow head 13 of the rotor 3.

According to an aspect of the invention, the release element 6 is a clutch or a similar element.

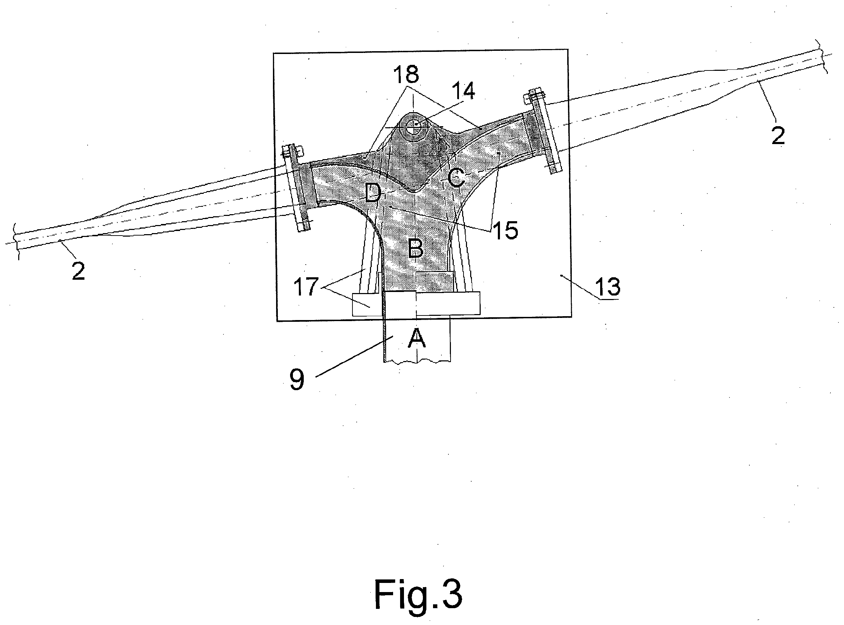

Figure 3 shows, in details, the elastic and oscillating hollow rotor head 13 through which compressed air can be transported from the hollow shaft of the rotor 3 to the hollow blades 2. In particular, a flexible and deformable elastomeric channel 15 is comprised between the conduit 9 of the hollow shaft of the rotor 3 and the hollow blades 2.

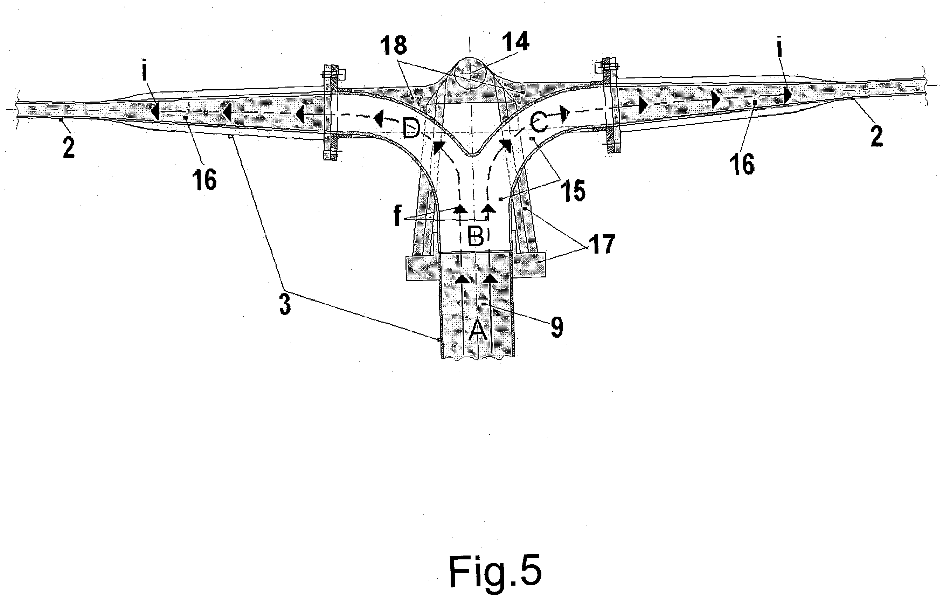

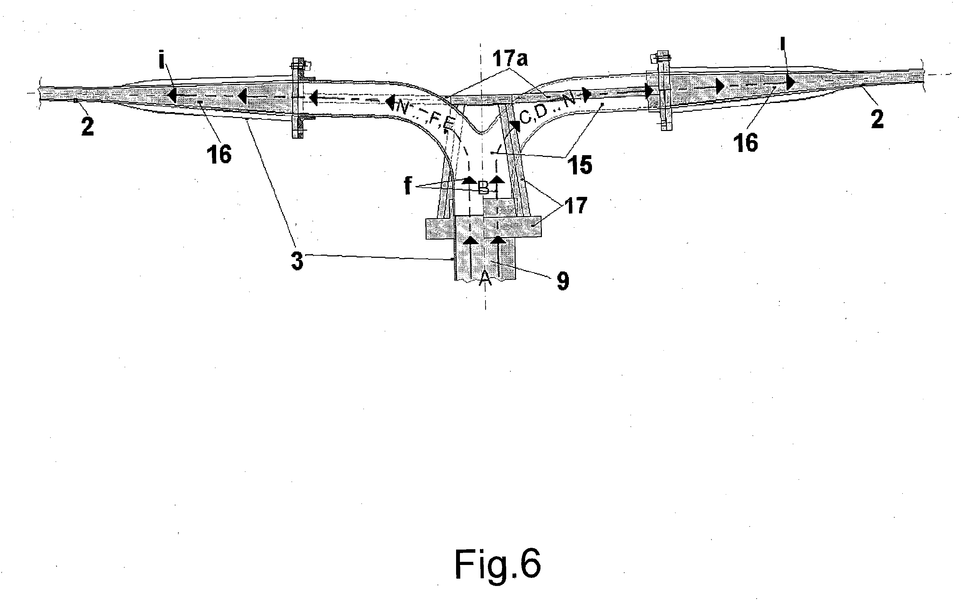

Advantageously according to the invention, the elastomeric channel 15 is a flexible elastomeric tube having a configuration like a multiple "V" and developing, in the terminal part of the "V", with a number of branches equal to the number of blades present in the helicopter. The function of the elastomeric channel 15 is to transport the compressed air to the blades 2. Therefore, in the case of two-bladed helicopter, as shown in figure 5, the compressed air follows a path formed by a portion A inside the conduit 9, B inside the elastomeric channel 15, then splitting in branches C and D channeling the air towards the blades 2. Instead, in the case of helicopter having more than two blades, as shown in figure 6, the compressed air follows a path formed by a portion A inside the conduit 9, B inside the elastomeric channel 15, then splitting in the branches C, D or E ... N, F .... N channeling the air towards the blades 2.

Advantageously according to the invention, as shown in figures 3 and 5, the elastic/oscillating hollow head 13 of the rotor is supported by a structure 17 fixed on the hollow shaft of the rotor 3 that, through a hinge 14, called flapping hinge, supports oscillating blades 2, only in the case of a helicopter with two blades and flapping hinge. The structure 17 connects, in the case of the two-bladed solution with the hinge of figure 3, the mast 9 to the blades 2 through an oscillating part 18 of the rotor head 13 oscillating around the hinge 14.

According to an aspect of the invention, the structure 17 is metallic.

According to another aspect of the invention, the structure 17 is made of structural materials, for example metals or composites or others.

Figure 5 shows schematically that the compressed air supplied from the compressor 8 is channeled in the conduit 9, in the direction indicated by the arrow f and is subdivided, inside the hollow oscillating head 13, as indicated by dashed arrows f and i, to flow in the conduits 16 of the blades 2 until reaching the nozzle 4, from which the flow of air escapes, as indicated by arrows k in figure 1.

In figure 6 the rotor head 13 is shown in the case of a helicopter having two or more than two blades, for example N blades. The rotor head 13 comprises a flexible horizontal structure 17a, connected to the structure 17, which allows the oscillation of the rotor head 13 and the elastomeric channel 15 transferring the flow of compressed air to the blades 2, through which the mast 9 is connected in a perfectly sealed way to the rotor head 13, in such a way that the compressed air will channel into arms 19a, 19b, 19c , ... 19N extending on the ramifications of the multiple "V" shaped flexible tube of the channel 15, in a perfectly sealed way towards the blades of the helicopter 2.

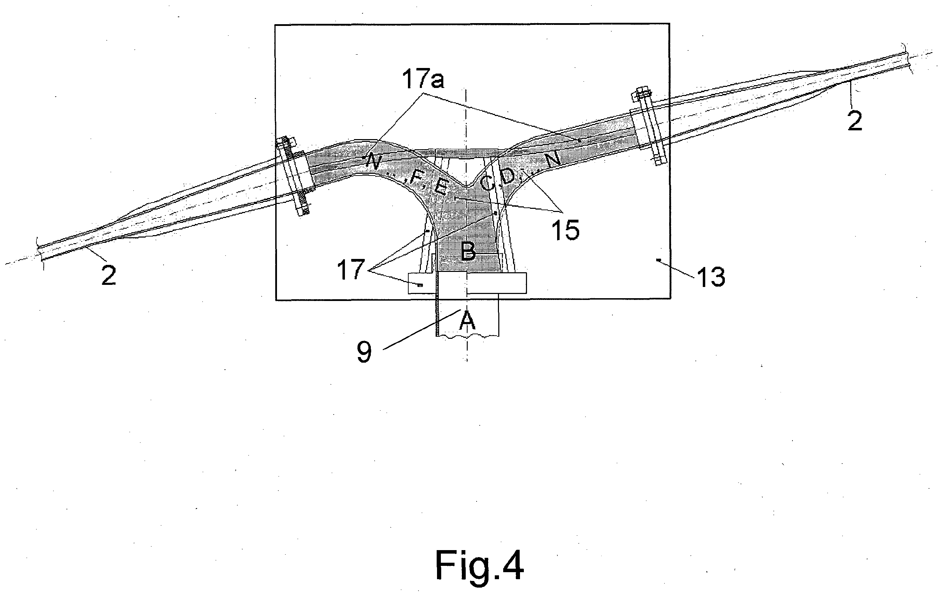

Advantageously according to the invention, the structure 17 is configured for absorbing the forces acting on the elastic/oscillating hollow head 13 shown in figures 3 and 5 and the elastic/flexible hollow head 13 shown in figures 4 and 6.

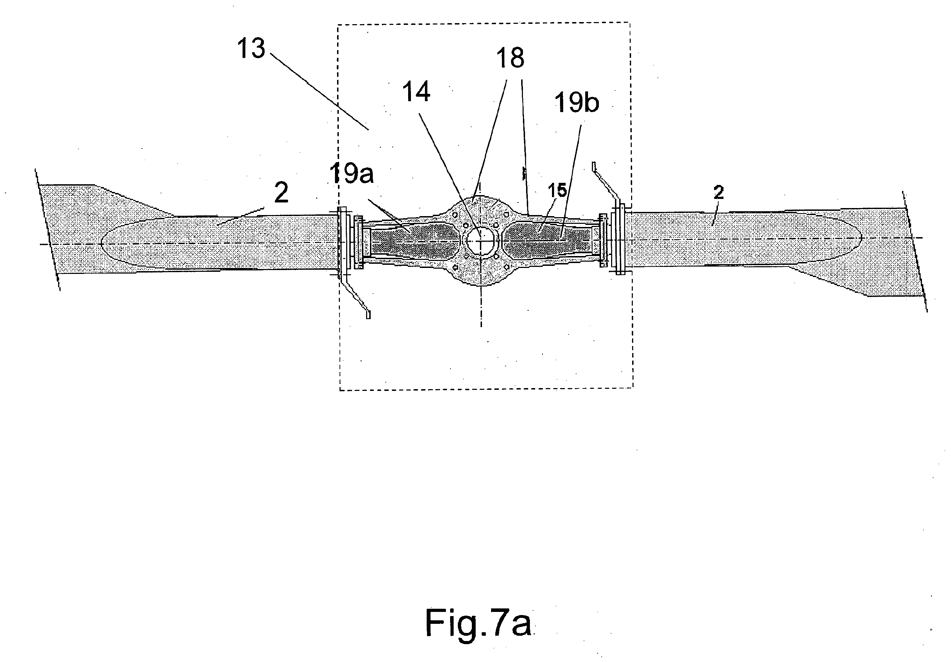

Figure 7a shows, in the case of a two-bladed helicopter, a top view of the rotor head 13 fixed on the hollow shaft of the rotor 3 and that supports the oscillating blades 2. The oscillating part 18 of the rotor head comprises the flapping hinge 14 and arms 19a and 19b developing from ramifications of the "V" shaped elastomeric flexible tube of the channel 15 to which are attached the blades 2 of the helicopter.

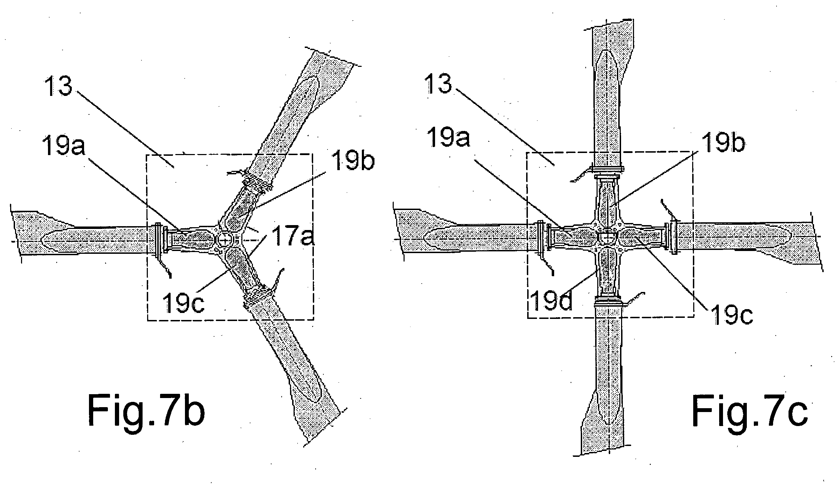

According to another aspect of the invention, as shown in figure 4 in the case of a helicopter having N blades, the horizontal flexible structure 17a has a purpose like to the oscillating part 18 of figure 5: i.e. to permit flapping motion. Therefore, the horizontal flexible structure 17a has a branched structure having N arms developing as figure 19a, 19b, 19c, for the three-bladed helicopter of figure 7b, and 19a-19b-19c-19d for the four-bladed helicopter of figure 7c.

Advantageously according to the invention, this particular configuration of the elastic hollow head 13 and of the flexible elastomeric channel 15 allows to follow the relative movements between the shaft of the rotor 3 and the blades 2 and to create a path for the compressed air towards the nozzles 4 of the blades 2. The connection of the conduit 9 of the hollow shaft of the rotor 3 with the elastomeric channel 15 and with the blades 2 is such as to make the coupling between these elements sealed.

Advantageously according to the invention, the system 20 can be realized inside helicopters with two-bladed rotors or rotors having more than two blades. In this case, the channel 15 is made inside a hollow elastomer block of reinforced material with a special weave of wires of strong materials (as example: glass,or carbon or kevlar or boron) and their combination to achieve the desired elastic properties, forming a plurality of elastic conduits, one for each blade, which lead the compressed air at the ends of each blade.

In operation, the motor 5 acts on the release element 6, which, by means of the gearbox 7, activates the compressor 8. The latter feeds compressed air inside the conduit 9 of the rotating shaft of the rotor 3.

Advantageously according to the invention, the generated compressed air passes through the flexible elastomeric channel 15 and the elastic hollow head 13 of the rotor and is distributed inside the blades 2 arriving to the nozzles 4, by means of an elastic deformation of the elastomeric channel 15 and, respectively, of the oscillating part 18 in the case of two-bladed helicopter, and of the flexible structure 17a, in the case of helicopter having more than two blades.

According to another aspect of the invention, the helicopter 1 is devoid of secondary rotor.

Therefore, the system for operating the helicopter blades with compressed air according to the invention allows to eliminate the external stationary pipes used to convey the fluid mass of gas to the blades of the aircraft, thanks to the particular shape of the hollow oscillating head of the rotor and of the elastomeric flexible channel.

Another advantage of the system for operating the helicopter blades with compressed air according to the invention consists in the payload gain due to the reduction of the total weight of the aircraft, having eliminated all the drive mechanisms and the secondary rotor itself.

Additionally, the system for operating the helicopter blades with compressed air according to the invention allows to obtain greater safety, thanks to the elimination of the risk of breakage of the mechanical transmission system of the motion to the secondary rotor.

Finally, the system for operating the helicopter blades with compressed air according to the invention allows to obtain a yield equaled to that of a classical system of mechanical drive of the main rotor and of the secondary rotor.

## Claims

1. System (20) for operating the hollow blades (2) of a helicopter (1) with compressed air, the system comprising, in addition to the hollow blades (2) having nozzles (4):
- at least a first machine comprising an engine (5) and configured for generating the mechanical power necessary to the helicopter lift;
- at least a second machine comprising a compressor (8) and configured for generating the compressed air for operating the hollow blades (2);
- coupling means for coupling the first machine with the second machine; and
- coupling means for coupling the second machine with the blades (2), comprising a hollow shaft of the rotor (3) and an oscillating hollow head (13) of the rotor (3) supporting the blades (2), the hollow shaft of the rotor (3) internally comprising a conduit (9) connecting the hollow shaft of the rotor (3) to the oscillating hollow head (13); **characterised in that** the oscillating hollow head (13) is an elastic head and comprises an elastomeric flexible and deformable channel (15) connecting the conduit (9) with the blades (2) and having the shape of a multiple "V" which presents, in the terminal parts of the "V", a number of branches equal to the number of the blades (2) and able to guide the compressed air towards the nozzles (4) of the blades (2).

2. System (20) according to claim 1, **characterized in that** the hollow elastic head (13) is supported by a structure (17) fixed to the conduit (9) and connecting it to the blades (2).

3. System (20) according to claim 2, **characterized in that** the structure (17) is made of a material comprised in the group constituted by:
- Metals;
- Structural materials, such as composites.

4. System (20) according to claim 2, **characterized in that** the rotor elastic head (13) comprises an oscillating part (18) supported by the structure (17) and oscillating around a flapping hinge (14).

5. System (20) according to claim 2, **characterized in that** the hollow elastic head (13) comprises a horizontal flexible structure (17a) supported by the structure (17).

6. System (20) according to claim 4, **characterized in that** the oscillating part (18) comprises the flapping hinge (14) and arms (19a, 19b) extending on the branches of the "V" shaped elastomeric flexible and deformable channel (15) to which the blades (2) are connected.

7. System (20) according to claim 5, **characterized in that** the horizontal flexible structure (17a) presents a branched structure comprising arms (19a, 19b, 19c, 19d...19N) extending on the branches of the "V" shaped elastomeric flexible and deformable channel (15).

8. System (20) according to claim 1, **characterized in that** the elastomeric flexible and deformable channel (15) is made inside a hollow elastomer block of reinforced material with a special weaving of threads of materials comprised in the group constituted by:
- steel;
- Glass;
- Carbon;
- Kevlar;
- Boron;
- the combination of said materials.

9. System (20) according to claim 1, **characterized in that** the path.for the compressed air comprises a first portion (A) inside the conduit (9), a second portion (B) inside the elastomeric channel (15) and branches (C, D, ... N; E, F, ... N) internal to conduits (16) of the blades (2).

10. System (20) according to claim 1, **characterized in that** the coupling means of the first machine with the second machine comprise at least a release element (6) able to allow the free rotation of the rotor (3) and activable by the engine (5), and at least one gearbox (7) at the output of the release element (6) configured for activating the compressor (8).

11. System (20) according to claim 10, **characterized in that** the release element (6) is a clutch.

12. Helicopter (1) comprising the system (20) according to any of the preceding claims.

13. Helicopter (1) according to claim 12, **characterized in that** it comprises only a primary rotor (3).

14. Helicopter (1) according to claim 12, **characterized in that** it has two or more than two blades (2).

## Patentansprüche

1. System (20) zum Betreiben der hohlen Rotorblätter (2) eines Hubschraubers (1) mit Druckluft, wobei das System zusätzlich zu den hohlen Rotorblättern (2) mit Düsen (4) umfasst:
- wenigstens eine erste Maschine, die einen Motor (5) umfasst und die dazu ausgelegt ist, die mechanische Kraft zu erzeugen, die dazu erforderlich ist, um den Hubschrauber anzuheben;
- wenigstens eine zweite Maschine, die einen Kompressor (8) umfasst und die dazu ausgelegt ist, die Druckluft zum Betreiben der hohlen Rotorblätter (2) zu erzeugen;
- Kupplungsmittel zum Kuppeln der ersten Maschine mit der zweiten Maschine; und
- Kupplungsmittel zum Kuppeln der zweiten Maschine mit den Rotorblättern (2), umfassend einen hohlen Schaft des Rotors (3) und einen oszillierenden hohlen Kopf (13) des Rotors (3), der die Rotorblätter (2) trägt, wobei der hohle Schaft des Rotors (3) im Inneren eine Leitung (9) umfasst, die den hohlen Schaft des Rotors (3) mit dem oszillierenden hohlen Kopf (13) verbindet;
**dadurch gekennzeichnet, dass** der oszillierende hohle Kopf (13) ein elastischer Kopf ist und einen elastomeren, flexiblen und deformierbaren Kanal (15) umfasst, der die Leitung (9) mit den Rotorblättern (2) verbindet und der die Form eines multiplen "V" aufweist, das in den End-Bereichen des "V" eine Anzahl von Verzweigungen zeigt, die mit der Anzahl der Rotorblätter (2) übereinstimmt, und die die Druckluft zu den Düsen (4) der Rotorblätter (2) führen können.

2. System (20) nach Anspruch 1, **dadurch gekennzeichnet, dass** der hohle elastische Kopf (13) von einer Struktur (17) getragen wird, die an der Leitung (9) befestigt ist und sie mit den Rotorblättern (2) verbindet.

3. System (20) nach Anspruch 2, **dadurch gekennzeichnet, dass** die Struktur (17) aus einem Material hergestellt ist, das in der Gruppe enthalten ist, die aus:
- Metallen;
- Strukturmaterialien, wie zum Beispiel Verbundwerkstoffen
besteht.

4. System (20) nach Anspruch 2, **dadurch gekennzeichnet, dass** der elastische Rotorkopf (13) einen oszillierenden Abschnitt (18) umfasst, der durch die Struktur (17) getragen wird und der um ein Schlaggelenk (14) herum oszilliert.

5. System (20) nach Anspruch 2, **dadurch gekennzeichnet, dass** der hohle elastische Kopf (13) eine horizontale flexible Struktur (17a) umfasst, die von der Struktur (17) getragen wird.

6. System (20) nach Anspruch 4, **dadurch gekennzeichnet, dass** der oszillierende Abschnitt (18) das Schlaggelenk (14) und Arme (19a, 19b) umfasst, die sich auf den Verzweigungen des "V"-förmigen, elastomeren, flexiblen und deformierbaren Kanals (15) erstrecken, mit dem die Rotorblätter (2) verbunden sind.

7. System (20) nach Anspruch 5, **dadurch gekennzeichnet, dass** die horizontale, flexible Struktur (17a) eine verzweigte Struktur zeigt, die Arme (19a, 19b, 19c, 19d... 19N) umfasst, die sich auf den Verzweigungen des "V"-förmigen, elastomeren, flexiblen und deformierbaren Kanals (15) erstrecken.

8. System (20) nach Anspruch 1, **dadurch gekennzeichnet, dass** der elastomere, flexible und deformierbare Kanal (15) im Inneren eines hohlen, elastomeren Blocks aus einem verstärkten Material, mit einer speziellen Verwebung von Materialfasern hergestellt ist, die in der Gruppe enthalten sind, die aus:
- Stahl;
- Glas;
- Carbon;
- Kevlar;
- Bor;
- der Kombination aus diesen Materialien
besteht.

9. System (20) nach Anspruch 1, **dadurch gekennzeichnet, dass** der Weg für die Druckluft einen ersten Bereich (A) im Inneren der Leitung (9), einen zweiten Bereich (B) im Inneren des elastomeren Kanals (15) und Verzweigungen (C, D,... N; E, F,... N) im Inneren von Leitungen (16) der Rotorblätter (2) umfasst.

10. System (20) nach Anspruch 1, **dadurch gekennzeichnet, dass** die Kupplungsmittel der ersten Maschine mit der zweiten Maschine wenigstens ein Freigabeelement (6) umfassen, das die freie Rotation des Rotors (3) ermöglichen kann und durch den Motor (5) betätigbar ist, und wenigstens ein Getriebe (7) an dem Ausgang des Freigabeelements (6), das zur Betätigung des Kompressors (8) ausgelegt ist.

11. System (20) nach Anspruch 10, **dadurch gekennzeichnet, dass** das Freigabeelement (6) eine Verbindungskupplung ist.

12. Hubschrauber (1), umfassend das System (20) nach einem der vorhergehenden Ansprüche.

13. Hubschrauber (1) nach Anspruch 12, **dadurch gekennzeichnet, dass** er nur eine Tragschraube (3) umfasst.

14. Hubschrauber (1) nach Anspruch 12, **dadurch gekennzeichnet, dass** er zwei oder mehr als zwei Rotorblätter (2) aufweist.

## Revendications

1. Système (20) pour faire fonctionner les pales creuses (2) d'un hélicoptère (1) avec de l'air comprimé, le système comprenant, outre les pales creuses (2) dotées de buses (4) :
- au moins une première machine comprenant un moteur (5) et conçue pour produire la puissance mécanique nécessaire au transport héliporté ;
- au moins une seconde machine comprenant un compresseur (8) et conçue pour produire l'air comprimé destiné à faire fonctionner les pales creuses (2) ;
- un moyen de couplage pour coupler la première machine à la seconde machine ; et
- un moyen de couplage pour coupler la seconde machine aux pales (2), comprenant un arbre creux du rotor (3) et une tête creuse oscillante (13) du rotor (3) supportant les pales (2), l'arbre creux du rotor (3) comprenant à l'intérieur un conduit (9) reliant l'arbre creux du rotor (3) à la tête creuse oscillante (13),
**caractérisé en ce que** la tête creuse oscillante (13) est une tête élastique et comprend un canal élastomère flexible et déformable (15) reliant le conduit (9) aux pales (2) et ayant la forme d'un « V » multiple qui présente, dans les parties terminales du « V », un nombre de ramifications égal au nombre de pales (2) et qui est capable de guider l'air comprimé vers les buses (4) des pales (2).

2. Système (20) selon la revendication 1, **caractérisé en ce que** la tête élastique creuse (13) est supportée par une structure (17) fixée au conduit (9) et le reliant aux pales (2).

3. Système (20) selon la revendication 2, **caractérisé en ce que** la structure (17) est faite d'un matériau compris dans le groupe constitué des suivants :
- métaux ;
- matériaux structurels comme des composites.

4. Système (20) selon la revendication 2, **caractérisé en ce que** la tête élastique du rotor (13) comprend une partie oscillante (18) supportée par la structure (17) et oscillant autour d'une articulation de battement (14).

5. Système (20) selon la revendication 2, **caractérisé en ce que** la tête élastique creuse (13) comprend une structure horizontale flexible (17a) supportée par la structure (17).

6. Système (20) selon la revendication 4, **caractérisé en ce que** la partie oscillante (18) comprend l'articulation de battement (14) et des bras (19a, 19b) s'étendant sur les ramifications du canal élastomère élastique et déformable (15) en forme de « V » auquel sont reliées les pales (2).

7. Système (20) selon la revendication 5, **caractérisé en ce que** la structure horizontale flexible (17a) présente une structure ramifiée comprenant des bras (19a, 19b, 19c, 19d...19N) s'étendant sur les ramifications du canal élastomère élastique et déformable en forme de « V » (15).

8. Système (20) selon la revendication 1, **caractérisé en ce que** le canal élastomère élastique et déformable (15) est formé à l'intérieur d'un bloc élastomère creux de matériau renforcé avec un tissage spécial de fils de matériaux compris dans le groupe constitué des suivants :
- acier ;
- verre ;
- carbone ;
- kevlar ;
- bore ;
- la combinaison desdits matériaux.

9. Système (20) selon la revendication 1, **caractérisé en ce que** le trajet pour l'air comprimé comprend une première partie (A) à l'intérieur du conduit (9), une seconde partie (B) à l'intérieur du canal élastomère (15) et des ramifications (C, D, ...N ; E, F, ...N) internes aux conduits (16) des pales (2).

10. Système (20) selon la revendication 1, **caractérisé en ce que** le moyen de couplage de la première machine à la seconde machine comprend au moins un élément de déblocage (6) capable de permettre la rotation libre du rotor (3) et activable par le moteur (5), et au moins une boîte à engrenage (7) à la sortie de l'élément de déblocage (6) conçue pour activer le compresseur (8).

11. Système (20) selon la revendication 10, **caractérisé en ce que** l'élément de déblocage (6) est un embrayage.

12. Hélicoptère (1) comprenant le système (20) selon l'une quelconque des revendications précédentes.

13. Hélicoptère (1) selon la revendication 12, **caractérisé en ce qu'**il ne comprend qu'un rotor primaire (3).

14. Hélicoptère (1) selon la revendication 12, **caractérisé en ce qu'** il comprend deux ou plus de deux pales (2).
